# EUROPEAN PATENT APPLICATION

(11) **EP 1 631 009 A1**
(43) Date of publication of application: **01.03.2006**
(21) Application number: 05076820.9
(22) Date of filing: 05.08.2005
(51) Int. Cl.: H04L 12/28

(54) **System and method for using a utility meter**

(30) Priority: 25.08.2004 US 604318 P; 18.07.2005 US 183602
(71) Applicant: Delphi Technologies, Inc., Troy, MI 48007 (US)
(72) Inventor: Dobosz, Paul J., Noblesville, IN 46060-9753 (US); Welk, Douglas L., Rossville, IN 46065 (US)
(74) Representative: Denton, Michael John

(57) **Abstract**

A system or method for using a utility meter (104) that is electronically addressable (106) and serves as a communications gateway for other devices (103). There are numerous potential advantages to the use of addressable (106) utility meters (104), and systems can incorporate one or more of those potential advantages. Emergency alerts can be sent and received through such meters (104). Emergency response personnel can use the information stored by the utility company (110) in conjunction with the meter (104) to rapidly identify the occupants of a residence or other building (102). Vacant properties can be monitored. E-commerce fraud can be reduced by using the addressable meter (104) to authenticate the identity of purchasers and/or sellers. Theft of digital content from cable, satellite, and other sources can be reduced through remote monitoring. Messaging services could utilize the communication (108) lines between meters (104) and broader networks.

## Description

### BACKGROUND OF INVENTION

The invention relates generally to systems and methods (collectively the "system") for using a utility meter. More specifically, the system uses an electronically addressable utility meter as a gateway for the exchange of information between the building and the outside world.

Two trends in 21^{st} century America seem difficult to ignore much less dispute. First, the demands of the modern economy have made people of all socio-economic backgrounds more mobile, and thus contact information has become more transitory. Employees seem to change jobs with increasing frequency. It is not uncommon for people to leave their town or even their state to pursue career advancement or to merely hold onto a job. Some neighbors seem to come and go so quickly that the traditional neighborhood relationships of the past seem quaint in 21^{st} century America. The highly transitory nature of society makes it less likely that information such as phone numbers, addresses, and other publicly accessible contact information will be up to date. Moreover, a highly transitory society can leave an individual or entire families more isolated with respect to their neighborhoods in which they live. For example, if the neighbors to an elderly widow are less likely to invest the time to get to know their neighbors, it is also less likely that such neighbors would notice whether or not the elderly widow is incapacitated by a health problem within her own house and out of public sight.

The second trend that is difficult to ignore much less dispute is the significance of e-commerce transactions. An increasing number of goods and services can be purchased online using the Internet or other forms of computer networks. The processing of such transactions in an accurate and non-fraudulent manner is made more difficult by the likelihood that publicly available contact information is out of date.

### SUMMARY OF THE INVENTION

The invention relates generally to systems and methods (collectively the "system") for using a utility meter. More specifically, the system uses an electronically addressable utility meter as a gateway for the exchange of information between the building and the outside world.

By using the meter as a gateway, various ancillary services can be provided. Ancillary services can include but are not limited to, one or more of the following:
transmitting meter information directly to the utility company;
transmitting emergency alerts to occupants of a building;
transmitting security alarms to third parties outside the building;
detecting fraudulent access to media content;
authenticating the identity of a purchaser in an online transaction;
purchasing media content;
monitoring an occupant subject to a home detention status;
providing rapid occupant information to emergency response personnel;
remotely setting and/or monitoring the thermostat in a building;
remotely monitoring vacant properties;
exchanging short messages;
monitor medical condition monitoring devices;
infrared human detection and network for reporting elderly care;
toilet flush detection and network reporting;
sump pump monitor with network reporting;
animal food and water level detection;
water condition monitoring;
sewer condition monitoring; and
exchange of information with devices within the building to devices and third parties outside the building.

The system can be more fully understood upon reading the following detailed description in conjunction with the accompanying drawings.

### BRIEF DESCRIPTION OF THE DRAWINGS

Figure 1 is a block diagram illustrating some examples of elements that can be included in the system
Figure 2a is a relationship diagram illustrating an example of various interactions between different entities that can occur using the system.
Figure 2b is a relationship diagram illustrating an example of various interactions between different entities that can occur using the system.
Figure 3 is a network diagram illustrating an example of a gateway (e.g. the meter) between a LAN and a WAN.
Figure 4 is a block diagram illustrating an example of a subsystem-level view of the system.
Figure 5 is a block diagram illustrating an example of a subsystem-level view of the system.
Figure 6 is a flow chart diagram illustrating an example of a method for using a meter as a gateway.
Figure 7 is a flow chart diagram illustrating an example of a method for using a meter as a gateway for ancillary services provided by third parties.
Figure 8 is a flow chart diagram illustrating an example of a user authentication process.

### DETAILED DESCRIPTION

### I. OVERVIEW

The invention relates generally to systems and methods (collectively the "system") for using a utility meter. More specifically, the system uses an electronically addressable utility meter as a gateway for the exchange of information between the building and the outside world.

The gateway can benefit the utility company, the occupants of the building, and third party service providers in a variety of different ways, including but not limited to:
providing secure and location specific data connectivity to a building;
emergency alerts to one or more buildings, such as homes, apartments, offices, or public areas;
serving as backup communication networks for security applications;
detecting fraudulent access to satellite television receivers and/or cable boxes;
authenticating the identity of purchasers and sellers in online transactions;
preventing fraud in online transactions;
securely authorizing access to cable and satellite television content;
monitoring home detention devices for use by parolees;
providing occupant information in a timely manner for emergency response personnel;
monitoring and/or setting a thermostat remotely;
monitoring occupancy of vacant properties remotely;
sending and/or receiving messages over utility lines;
exchanging information between intelligent appliances and/or other devices in the building with applications and entities outside the building;
monitoring medical devices within the building;
infrared human detection with network reporting for care of the elderly and/or infirmed;
toilet flush detection with network reporting;
sump pump monitor with network reporting;
animal food and water level detection;
water condition monitor;
water level (e.g. flooding) monitor; and
sewer condition monitor.

### II. INTRODUCTION OF ELEMENTS

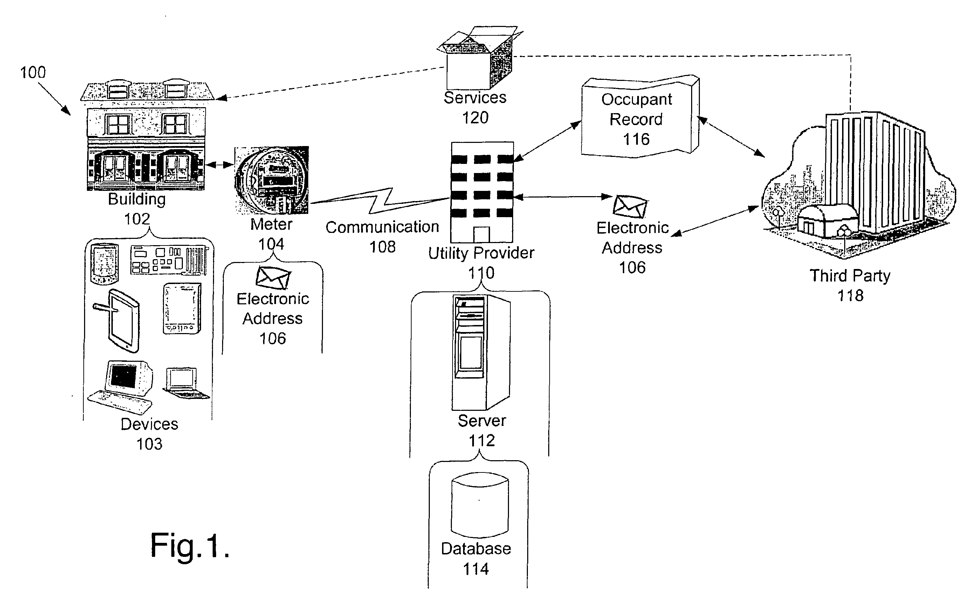

Figure 1 is a block diagram illustrating some examples of elements that can be included in a system or method that uses a meter 104 with an electronic address 106 as a gateway (collectively the "system" 100).

### A. Building

A building 102 is potentially any structure having a utility meter 104 with a fixed electronic address 106. Some buildings 102 are residential, such as detached single family homes, townhouses, condominiums, apartments, mobile homes, lofts, etc. Examples of non-residential buildings 102 include offices, warehouses, factories, stores, public areas, parks, remote water pumps, etc.

### B. Devices

The building 102 can house a variety of mobile and non-mobile devices (collectively "devices" 103) that can benefit from using the meter 104 as a gateway for communication between the building 102 and the outside world. Examples of devices can include general purpose computers such as tablet computers, laptop computers, desktop computers, and PDAs. Any "intelligent" appliance with an embedded computer capable of communicating with the meter 103 can be a device 104. The system 100 can flexibly accommodate future intelligent appliances, as well as a wide variety of different networking technologies and methodologies.

In some embodiments, more than one of the devices 103 will be connected to a network in the building 102. In other embodiments, there is no network of devices 103, but the devices 103 are capable of interacting with the meter 104.

### C. Meter

A meter 104 is a component connected to the building 102 that is operated and managed by a utility company. Examples of meters 104 can include electrical power meters, gas meters, and water meters. In the future, cable and satellite components may also server as meters 104. For a meter 104 to serve as a gateway for the flow of information in the system 100, the meter 104 should be addressable, (i.e. it should have an electronic address 106 such as an IP address).

In some embodiments of the system 100 where the utility provider 110 is an electrical power company and the meter 104 is an electrical power meter, the meter 104 can be integrated into a nearby transformer to lower installation costs and improve the visual appeal of buildings 102.

### D. Electronic Address

An electronic address 106 associated with the meter 104 allows the meter 104 to serve as an information gateway for the system 100. Potentially any unique identifier can serve as an electronic address 106, as long as it can be uniquely associated with the specific location where the meter is installed.

### E. Communication

A communication 108 is information exchanged between the meter 104 and a utility provider 110. The communication 108 can be transmitted over the same physical connection used by the utility provider 110 to provide the utility, such as an electrical power line used to provide electricity. The communication 108 can also be transmitted using satellites, earth relay stations, cellular telephone network, and network control centers. Any technology or combination of technologies that can be used to transmit information can be used by the system 100 to transfer information.

### F. Utility Provider

A utility provider 110 is the company that provides the meter 104 to the building. In many embodiments of the system 100, the utility provider 110 operates the gateway functionality of the system 100. In other embodiments, an outside entity such as an application service provider (ASP) can be responsible for the aspects of the system 100 that do not directly relate to the providing of utility services to the building 102.

### G. Server

A server 112 is any device that is capable of storing information used to support the functionality of the system 100. One or more servers 112 will typically host one or more databases 114. The server 112 can be operated and managed by the utility provider 110, or those tasks can be performed by another entity such as an ASP.

### H. Database

A database 114 is potentially any information technology methodology used to store information so that it can be accessed in the future. Databases 114 are typically relational databases, although object-oriented and hierarchical databases can also be used. Flat files, arrays, and other data structures can also be used to achieve the functionality of the database 114. Databases 114 are used by the system 100 to store information such as electronic addresses 106 associated with meters 104, as well as occupant and building information that is associated with the particular building 102 associated with the particular meter 104.

### I. Occupant Record

Information relating to occupants of a building as well as to the building itself (collectively "occupant information") can be stored in one or more databases 114 as one or more occupant records 116. The variety of information that can be stored as occupant records 116 can vary as widely as the different ancillary services 120 (as identified above and below) that can be performed by the system 100. For example, if the system 100 is being used to communicate with intelligent appliances in the building, then the occupant record 116 can include information relating to the structure, status, and functionality of those devices 103.

Occupant information along with the corresponding electronic address 106 of the applicable meter 104 can be sent to a third party 118 for the purpose of providing services 120 that benefit either the building 102, the utility provider 104, and/or the third party 118.

### J. Third Party

A third party 118 is any individual, organization, company, government entity, or non-profit organization 118 that is provided access to occupant information in order to perform the functionality of the system 100. For example, if the system 100 is configured to provide emergency response personnel with information relating to the occupants of the building 102, the third party 118 could be the police department, the fire department, an ambulance, etc.

### K. Services

An ancillary service 120 is any function, process, or advantage generated by the third party 118 that is influenced by the occupant information transmitted to the third party 118 by the system 100. Ancillary services 120 can also be referred to as services 120. Services 120 do not directly relate to providing of the utility to the building 102 by the utility provider 110.

The potential variety of different services 120 are discussed both above and below.

### III. ENTITY INTERACTIONS

Because utilities are location specific, utility providers 110 are often best situated to possess up to date information relating to the occupants of a building 102. However, utility providers 110 typically have little motivation for storing and accessing up-to-date occupant records 116 using "addressable" meters 104 as gateways because utility providers 110 are not in the business of providing the ancillary services 120. The system 100 allows third parties 118 to benefit from the information library of the utility provider 110.

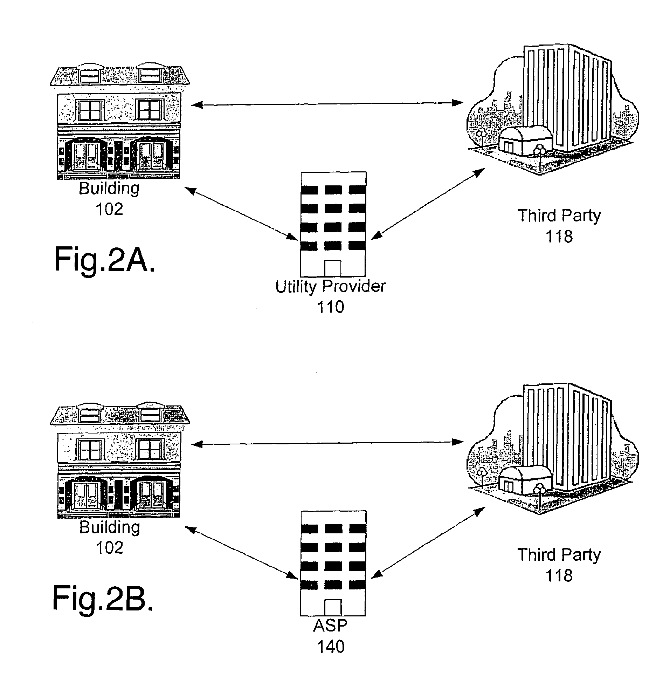

As illustrated in Figures 2a and 2b, third parties 118 typically provide the services 120 that are made possible by the system 100. In some embodiments, the utility provider 110 could engage in the business and operations of what would otherwise be a third party 118. The system 100 anticipates that buildings 102, utility providers 110, and third parties 118 can each potentially benefit from the exchange of information made possible by the system 100.

As illustrated in Figure 2b, some embodiments of the system 100 may involve an application service provider ("ASP") 140 to maintain and operate the aspects of the system 100 that make information available to third parties 118. Utility providers 110 may not want to take on responsibilities that are not within the core competency of some utility providers 110.

### IV. NETWORK VIEW

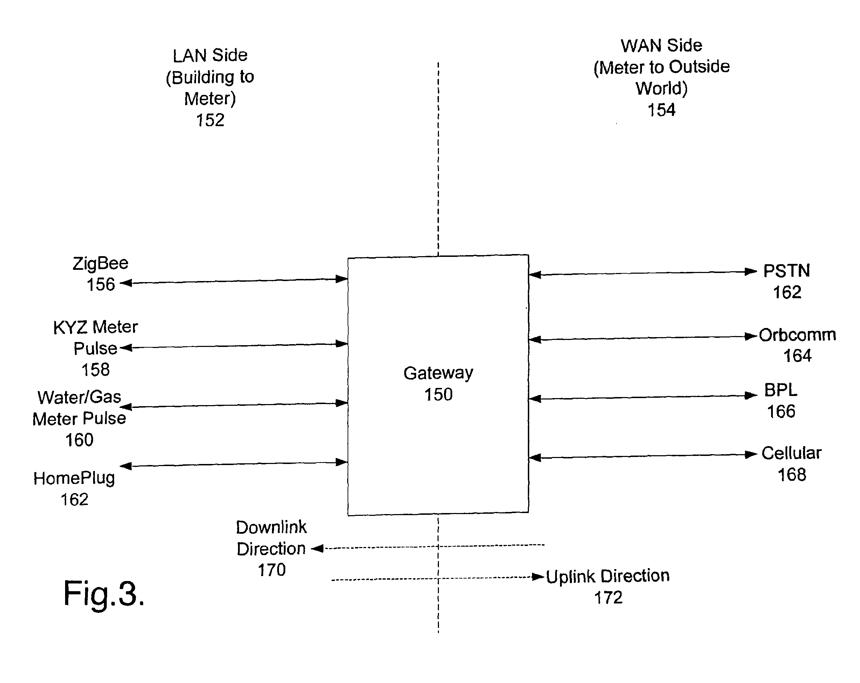

Figure 3 is a network diagram illustrating an example of a gateway 150 (e.g. the addressable 106 portion of the meter 104) between a LAN 152 and a WAN 154. A wide variety of different network connections can interact with the gateway 150.

The particular number of network connections and the characteristics of those connections will depend on the services 120 being provided in the particular embodiment of the system 100.

### A. Up to the Gateway

On the side of the gateway 150 in that runs from the building 102 to the meter 104 in Figure 1, there is a: (1) ZigBee 156 or some other form of wireless connectivity; (2) a KYZ meter pulse 158 or some other form of high quality shielded or unshielded signal wires; (3) a meter pulse 160 for water and/or gas flow information; and (4) a home plug 162 or some other form of interactive network connectivity for various devices 103.

### B. Beyond the Gateway

On the side of the network to the outside of the meter 104 with respect to the building 102 are potential connections including: (1) a PSTN (public Switched Telephone Network) or some other form of telecommunication land line; (2) an Orbcomm line 164 or some other form of orbital network; (3) a BPL (Broadband over Powerline) line 166 or some other form of broadband and/or powerline connectivity; and (4) a cellular connection 168.

In some embodiments of the system 100, different services 120 can utilize a wide variety of different network connections. As indicated by the arrows at the bottom of the Figure, a downlink direction 170 is towards the building 102 and an uplink direction 172 points away from the building towards the outside world, i.e. where third parties 118 perform services 120 using the information made accessible by the system 100.

### V. SUBSYSTEM-LEVEL VIEW

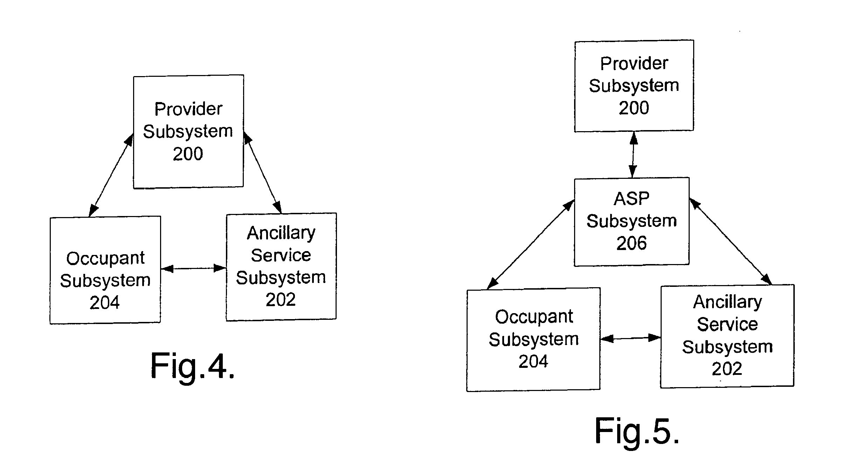

Figure 4 is a block diagram illustrating an example of a subsystem-level view of the system 100.

### A. Provider Subsystem

A provider subsystem 200 includes the infrastructural components controlled and operated by the utility provider 110, including the servers 112 and databases 114 used to store and access occupant records 116 that are associated with electronic addresses 106 which are in turn associated with meters 104 and buildings 102. The provider subsystem 200 also includes the mechanisms for communications 108 between the meter 104 and the utility provider 110.

### B. Service Subsystem

A service subsystem 202 includes the interactions of one or more third parties 118 as recipients of occupant information from the provider subsystem 200. The service subsystem 202 makes services 120 accessible to the system.

### C. Occupant Subsystem

An occupant subsystem 204 is the means by which occupants, their devices 103, and the buildings 102 inhabited by the occupants and devices 103 are made manifest to provider subsystem 200 or ancillary service subsystem 202. In addition to providing information to the system 100, the occupant subsystem 204 interacts with the services 120 made accessible by the services subsystem 202.

### D. ASP Subsystem

Figure 5 is a block diagram illustrating an example of a subsystem-level view of the system 100 that includes an ASP subsystem 206. As illustrated in the Figure, the ASP subsystem 206 serves as an intermediary between the provider subsystem 200 and the other subsystems. The embodiment illustrated in Figure 5 discloses an example of a utility provider 110 that wants to benefit from the system 100 and to make the functionality of the system 100 available to third parties 118 and to occupants without wanting to run the system 100 themselves.

### VI. PROCESS-FLOW VIEWS

### A. Example 1

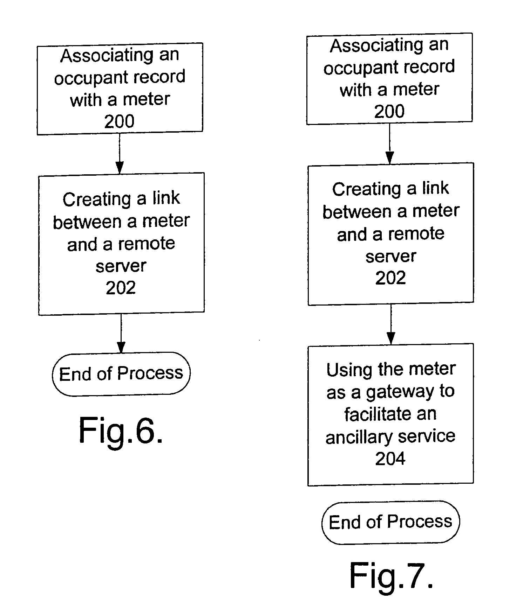

Figure 6 is a flow chart diagram illustrating an example of a method for using a meter 104 as a gateway 150.

At 200, an occupant record 116 is associated with the meter 104.

At 202, a link is created between the meter 104 and a remote server 112 run by either the utility provider 110 or the ASP 140 acting on behalf of the utility provider 110. The information gateway 150 is ready for use, and the setup process ends.

### B. Example 2

Figure 7 is a flow chart diagram illustrating an example of a method for using a meter 104 as a gateway 150 for ancillary services 120 provided by third parties 118.

As discussed both above and below, a wide variety of services 120 can be made accessible at 204.

### VII. AUTHENTICATION HEURISTIC

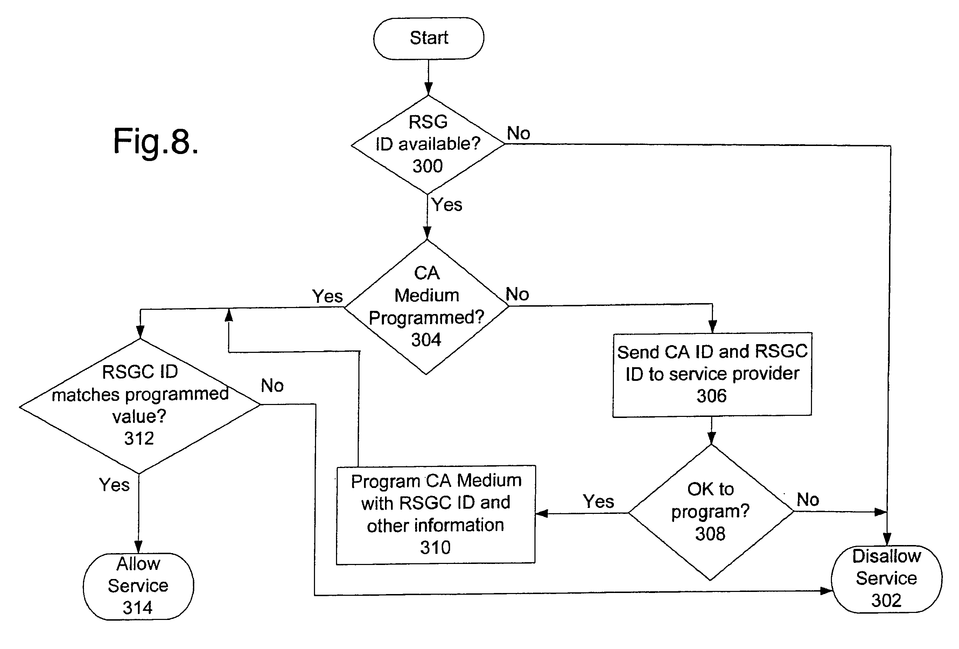

Figure 8 is a flow chart diagram illustrating an example of a user authentication process. In some embodiments, the authentication heuristic illustrated in Figure 8 is the sole method for determining whether or not an occupant is allowed to access a particular service 120 and the outcome of the heuristic is dispositive with respect to whether or not the occupant can access the service 120. In other embodiments, occupant authentication can be performed as a "backup" to other forms of authentication, such as in the case of an online transaction. Failure to properly authenticate may merely result in a warning to the other party, or such failure may influence the transaction in other ways without necessarily prohibiting the transaction.

At 300, the system 100 determines whether or not the residential supervisory and control gateway (RSCG) ID is available. If it is not, service is disallowed at 302.

If the ID is available, the system 100 determines at 304 whether or not the access value for the service 120 is programmed into the device 103. If it is not, the service ID and the RSGC ID are sent to the third party 118 or the ASP 140 with an inquiry at 308 whether it is ok to program the device 104 for access. If at 308 it is not ok to provide for such access, service is disallowed at 302.

Otherwise, the access information is programmed remotely by the ASP 140 or the third party 118 at 310. If the RSGC ID matches the programmed value at 312, service is allowed at 314. Otherwise, it is disallowed at 302.

### VIII. EXAMPLES OF SERVICES

There are a wide variety of different services 120 that can either be made possible by using the addressable meter 104 as a gateway 150, or that can be enhanced significantly by using the addressable meter 104 as a gateway 150. Some examples are discussed both above and below. Services 120 are made accessible by the system 100 in a manner that is generally consistent with the process flow in Figure 1.

### A. Rapid Identification for Emergency Response Personnel

A variety of services 120 by the system 100 could assist emergency response personnel in an emergency. Information relating to the occupants (including, potentially, medical information) could be transmitted to the ambulance from the database 114 residing on the server 112. The lights at the building 102 could also be made to automatically flicker or flash, assisting the ambulance in finding the building 102.

### B. Thermostat with Network Reporting

The occupants of the building 102 can be notified even when outside the building 102 if the temperature range within the building 102 exceeds certain ranges or if the heater and/or air conditioner ceases to function properly.

A furnace or air conditioning failure can persist for hours without being detected if the occupants are not within the building 102 at the time of failure. By the time failure is detected, the building 102 can be extremely cold or warm, and the condition will only get worse before it is ultimately corrected. After the failure is corrected, the building 102 is returned to the desirable temperature, which often requires significant amounts of energy. By detecting failure early through remote means, power is saved and inconvenience minimized.

The occupant of the building can be notified when the temperature exceeds the predefined range, which can be influenced by the time of day, day of the week, and season of the year. In some embodiments, the occupants can adjust the predefined temperature remotely over the Internet or some similar network.

### C. Remotely monitoring occupancy in vacant property

Monitoring can be performed remotely to determine whether a vacant property has become occupied. If an allegedly vacant building 102 is associated with a non-vacant electrical consumption profile, a message can be sent to the power company as well as to the owner of the building 102.

### D. Messaging

Smart appliances and other devices 103 with data display and/or sound capability can communicate with the meter 104 using short range wireless or home plug communications. The electric meter 104 can relay the messages and replies to and/or from the sender. The provider 110 and/or ASP 140 can relay messages received from the Internet to occupants in the building 102.

### E. Medical Condition Monitoring Device

There are many situations where it will be desirable to record various biometrics or vital sign measurements and regularly transmit the data to a health monitoring service for further processing. For example, a diabetic may want to have blood sugar levels regularly transmitted to his or her doctor for the purpose of establishing a more natural insulin regimen. Similarly, a heart patient may have regular blood pressure measurements sent to his or her cardiologist in order to look for patterns that can be used to help avoid any worsening of condition.

The monitoring device 103 can be either hardwired to its sensors (such as a blood pressure cuff) or can utilize a wireless connection (such as a pulse rate watch). At predefined intervals, the monitoring device 103 can collect and store data from the sensors. The transmission time of the data can be influenced by whether or not a condition appears critical.

### F. Infrared Human Detection and Network Reporting for Elderly Care

An infrared detector can be used to indicate activity within a building for the purpose of elder care.

Many elderly people live at home alone and generally care for themselves with only occasional visits from relatives and visiting nurses. However, following an injury such as from a fall or a stroke, the person may be unable to summon help and must instead wait for the next visitor before receiving medical assistance. Moreover, many care givers would like to provide more continuous care, but are hindered by time and distance. The system 100 can provide a mechanism for care givers to have an indication that the person in question is going about their business normally. If something is wrong, the system 100 can transmit an early indication or warning about the particular symptom or condition.

The system 100 can include a small module that can be plugged into a convenient outlet where the person being monitored would be expected to travel regularly. The module can include a low-cost PIR sensor that can detect the presence of the human body and a wired or wireless connection to the gateway 150. If the detector does not detect the presence of the person being monitored within a predetermined interval, such as 4 hours during the daytime and 9 hours at night, an alert could be sent to a caregiver or other appropriate agency. It is also possible to query the detector in order to determine that it is operating properly.

### G. Toilet Flush Detection and Network Reporting

As part of monitoring a residence occupied by an elderly, infirm, or otherwise vulnerable occupant, the system 100 can be configured to detect the flushing of a toilet and reporting that information to a care provider or monitoring service.

### H. Sump Pump Monitor

The system 100 can alert occupants when they are not at home that the sump pump is not working, and that the water level in a portion of the house is rising.

Many times a home owner with a basement finds that his or her basement has flooded due to a sump pump failure, and that the failure has gone unnoticed for hours or even days. There are several different methods that can be used to detect flooding before it is severe.

A battery-operated water level detector device 103 can be installed with the sump. The device 103 can include a wireless connector to the gateway 150. When water reaches the level of the detector device 103, a message can be sent to the home owner or a third party 118 monitoring service via the gateway 150.

The water-level detector device 103 can be integrated into the sump pump itself and utilize the power of the line to communicate with the gateway 150.

In some embodiments, the sump pump includes a self diagnostic module that can detect failure or improper operation and communicate the status to the gateway 150 over power lines.

### I. Animal Food and Water Levels

In many large animal farms as well as in family homes, animals can be fed and given access to water using automated means. Equipment failure may take several days or even weeks to detect. Level detector devices 103 in communication with the gateway 150 can monitor food and water levels, notifying the occupants or temporary care givers in the case of unavailable occupants.

### J. Water Condition Monitor

Water sensor devices 103 in communication with the gateway 150 can monitor the environmental quality of drinking water. The monitor device 103 can look for levels of iron, hydrogen sulfide, e-coli bacteria, etc. Such sensors can be located at a well head for a group of buildings 102, and/or within individual buildings 102.

### K. Sewer Monitor

Grease, solvents, and other harmful materials often illegally enter municipal sewer systems. If the material enters the sanitary sewer, the result can be harmful to the process of breaking down the wastes and lead to reduced water treatment capacity. If the foreign material enters the storm sewer system, it can enter a surface water feature such as a lake, stream, or river where it can cause environmental damage. A monitoring device 103 can be installed at a sewer lift station for a building 102. If a problem is detected, the gateway 150 can inform the occupant or the appropriate third party 118.

### L. Security Applications

The gateway 150 can be used as the primary network for security applications, or as a backup network in an instance where the primary network is not functional. Notification can be sent to third parties 118 such as the police as well as private security providers.

### M. Fraud Detection for Access to Cable and Satellite Content

The system 100 can confirm with third party 118 cable and satellite providers that the occupants in a building are authorized (e.g. they have paid for) the cable and/or satellite content being viewed. The system 100 can be configured to automatically prohibit fraudulent access, generate a warning, and/or report the fraud to the third party provider 118.

### N. Identity Authentication for Online Transactions

The identity and location of occupants can be confirmed in online transactions by allowing the other party to request confirmation from the gateway 150.

### O. Method for Securing Access to Cable and Satellite Content

Access to cable and satellite content can be conditioned upon confirmation that access is warranted. Such confirmation can be provided through the gateway 150.

### IX. ALTERNATIVE EMBODIMENTS

In accordance with the provisions of the patent statutes, the principles and modes of operation of this invention have been explained and illustrated in preferred embodiments. However, it must be understood that this invention may be practiced otherwise than is specifically explained and illustrated without departing from its spirit or scope.

## Claims

1. A gateway for managing the flow of information to and from a building (102), comprising:
an outside line, wherein said outline line facilitates the delivery of a utility and of a communication (108); and
a meter (104), wherein said meter (104) provides for an electronic address (106);
a database (114), wherein said database (114) is remote from the building (102), and wherein said database (114) provides for storing of said electronic address (106) and an occupant record (116) associated with said electronic address (106);
wherein said outside line connects a utility provider (110) to said meter (104); and
wherein said communication (108) is transmitted to a third party (118).

2. The gateway of claim 1, wherein said communication influences an ancillary service (120), said ancillary service (120) including at least one of: (a) an emergency alert; (b) a rapid identification for emergency response personnel; (c) a monitoring of vacant property; (d) authenticating an online purchaser; (e) detecting fraudulent media access; (f) authorizing media access; (g) exchanging messages with devices in the building; and (h) monitoring an occupant.

3. The gateway of claim 1, further comprising a server (112), wherein said database (114) is accessible from said server (112), wherein said server (112) is not located within the building (102), wherein said gateway provides for exchanging a plurality of communications between said server (112) and said meter (104).

4. The gateway of claim 3, further comprising a satellite, wherein said satellite provides for exchanging said communications (108) between said server (112) and said meter (104).

5. The gateway of claim 1, wherein said communication (108) is sent to a plurality of residences.

6. The gateway of claim 1, wherein said occupant record (116) and electronic address (106) is transmitted to a plurality of third party providers (118) responsible for providing a plurality of ancillary services (120).

7. The gateway of claim 1, wherein the building (102) is a single family home, wherein the meter (104) is an electrical power meter, wherein the utility is electrical power, and wherein said communication (108) relates to devices (103) within the single family home.

8. The gateway of claim 1, further comprising a WAN (154) and a LAN (152), wherein said WAN (154) resides between said meter (104) and said database (114), and wherein said LAN (152) resides between said meter (104) and the building (102).

9. A system for providing an ancillary service (120) using a utility meter (104), comprising:
a provider subsystem (200), wherein said provider subsystem (200) provides for a meter (104), a server (112), a database (114), and a link (108) between said server (112) and said meter (104), wherein said database (114) resides on said server (112), wherein said meter (104) is associated with an electronic address (106), and wherein said database (114) provides for storing said electronic address (106) and an occupant record (116) associated with said electronic address (106); and
a service subsystem (202), wherein said service subsystem (202) provides for at least one of a plurality of ancillary services (120).

10. A method for providing a utility and a communications link to a home, comprising:
associating an occupant record (116) with an electronic address (106) in a meter (104) utilized for measuring the delivery of said utility to said home, and
creating a link between the meter (104) and a server (112),
wherein said link (108) provides for exchanging a plurality of communications (108) between the meter (104) and the server (112), wherein the link (108) further provides for the transmission of a utility to the home.

11. The method of claim 10, further comprising selectively providing a third party (118) with access to the occupant record (116) in furtherance of an ancillary service (120).

12. The method of claim 10, further comprising authenticating a purchaser in an online transaction using the occupant record (116).

13. The method of claim 10, further comprising:
receiving data from a device (103) within the home, wherein the data is received by the meter (104); and
transmitting the data to a third party (118), wherein the data is transmitted by the meter (104).

14. The method of claim 10, further comprising:
monitoring a health status of an occupant of the home.

15. The method of claim 10, further comprising:
transmitting an internal environmental instruction to the home.

16. The method of claim 10, further comprising:
monitoring the home, wherein the home is vacant.

17. The method of claim 10, further comprising:
sending an emergency alert to the home.

18. The method of claim 10, further comprising:
authorizing access to media content using the communication (108).

19. The method of claim 10, further comprising:
using a communication (108) to exchange a message between an occupant of the home and a service provider (120).

20. The method of claim 10, further comprising:
detecting at least one of: (a) an animal food level; or (b) a water level.
